# EUROPÄISCHE PATENTSCHRIFT

(11) **EP 2 695 865 B1**
(45) Veröffentlichungstag und Bekanntmachung des Hinweises auf die Patenterteilung: **30.11.2016**
(21) Anmeldenummer: 13189323.2
(22) Anmeldetag: 13.08.2008
(51) Int. Cl.: C04B 28/02, C04B 40/00, C04B 28/18

(54) **Mineralisches Bindemittel sowie ein Verfahren zu seiner Herstellung**
Mineral adhesive agent and method for its manufacture
Liant minéral et son procédé de fabrication

(30) Priorität: 27.08.2007 DE 102007040349
(43) Veröffentlichungstag der Anmeldung: 12.02.2014
(62) Teilanmeldung aus: 08162336.5
(73) Patentinhaber: Dyckerhoff GmbH, 65203 Wiesbaden (DE)
(72) Erfinder: Parker, Frank, 65205 Wiesbaden (DE); Strunge, Josef Dr., 65203 Wiesbaden (DE); Deuse, Thomas, 63075 Offenbach (DE)
(74) Vertreter: Patent- und Rechtsanwälte Dr. Solf & Zapf

(56) Entgegenhaltungen:
- EP-A1- 0 616 986
- EP-A1- 1 719 742
- EP-A2- 0 289 720
- DATABASE COMPENDEX [Online] ENGINEERING INFORMATION, INC., NEW YORK, NY, US; 2006, FEJDYS M ET AL: "Mechanical properties of silicone vulcanizates crosslinked with polymethylhydrosiloxanes, containing silica and calcium carbonate", XP002720488, Database accession no. E2006039653746
- EVONIK DEGUSSA GMBH: "Product Information SIPERNAT (R) 310", INTERNET CITATION, 1. April 2008 (2008-04-01), Seiten 1-2, XP002636241, Gefunden im Internet: URL:http://www.sipernat.com/sites/dc/Downl oadcenter/Evonik/Product/SIPERNAT/Produkti nformationen/PI%20SIPERNAT%20310%20%20us.p df [gefunden am 2011-05-11]
- SASAKI K ET AL: "Synthesis of Calcium Silicate Hydrate with Ca/Si=2 by Mechanochemical Treatment", JOURNAL OF THE AMERICAN CERAMIC SOCIETY, BLACKWELL PUBLISHING, MALDEN, MA, US, Bd. 80, Nr. 2, 1. Januar 1996 (1996-01-01) , Seiten 472-476, XP002585888, ISSN: 0002-7820

## Beschreibung

Die Erfindung betrifft ein mineralisches Bindemittel sowie ein Verfahren zu seiner Herstellung auf Basis insbesondere genormter Zemente, insbesondere zur Herstellung von frühfesten und/oder hochfesten Betonen oder Mörteln oder Zementsuspensionen.

Frühfeste und/oder hochfeste Betone bezeichnet man auch als Hochleistungsbetone, die schnell erstarren und erhärten (schnelle Betone) oder höhere Festigkeiten erbringen und besonders beständig gegen aggressive Medien sind (hochfeste Betone).

Schnelle Betone werden in der Regel mit sogenannten Schnellzementen aus besonderen Klinkern, die z. B. im wesentlichen Calciumsulfoaluminate aufweisen, oder aus Tonerdeschmelzzementen oder Gemischen aus Tonerdeschmelzzement mit Portlandzement oder den besonderen Klinkern hergestellt, wobei die Frühfestigkeit in der Regel mit organischen Zusatzmitteln ausgesteuert werden kann. Derartige Zusatzmittel sind Fremdbestandteile in diesen mineralischen Gemengen, können unerwünschte Nebenwirkungen haben und reagieren unkontrollierbar bei Temperaturunterschieden und/oder Rohstoffschwankungen bis hin zu gegenteiligen Wirkungen wie langsames Erstarren und Erhärten oder sogar Ausfall des Erstarrens und Erhärtens. Insofern ist diese Schnellzeinentkonzeption insbesondere zur Herstellung von Transportbeton relativ ungeeignet.

Ein anderes Schnellzementkonzept sieht ein hydraulisches Bindemittel mit einer nach Wasserzugabe fließ- und erstarrungsfähigen Bindemittelkomponente und einer zum Beschleunigen des Erstarrens dienenden Beschleunigerkomponente vor, wobei die Beschleunigerkomponente hochfeines Calciumhydroxid mit bestimmten spezifischen Oberflächen und/oder Teilchengrößen sein soll (EP 1 719 742 A1). In diesem Dokument ist der derzeit bekannte Stand der Technik auf dem Sachgebiet zusammengefasst dargestellt, wobei darauf hingewiesen wird, dass für die Festigkeitsbildung die beschleunigte Bildung der Calciumsilikathydratphasen aus den Calciumsilikaten der Zementpartikel maßgeblich ist. Demgemäß soll das zugesetzte hochfeine Calciumhydroxid die nach etwa 6 bis 8 Stunden beginnende Calciumsilikathydratbildung (CSH-Bildung) durch Keimbildung beschleunigen.

Bei Schnellzementen mit Calciumhydroxid als Beschleunigerkomponente gemäß EP 1 719 742 A1 besteht die Gefahr einer unzureichenden Lagerstabilität. Calciumhydroxid karbonatisiert bekanntlich bei Zutritt von Luftkohlendioxid. In der Folge ist das Reaktionsverhalten dieser Schnellzemente nicht konstant. Damit kann das hohe Frühfestigkeitspotenzial nicht immer ausgeschöpft werden.

Für hochfeste und besonders beständige Betone werden meist C₃A-arme Portlandzemente der Festigkeitsklasse 42,5 bzw. 52,5 R in Kombination mit Mikrosilika eingesetzt. Ziel ist dabei, bereits in der trockenen Phase eine möglichst dichte Kugelpackung zu realisieren, die nach Wasserzugabe dann auch zu einem partikeldicht gelagerten Zementleim führt. Zudem soll das Mikrosilika, das bei der Ferrosiliziumherstellung als Flugstaub abgeschieden wird und z. B. zu 85 bis 98 Gew.% aus amorphem SiO₂ besteht, mit dem Calciumhydroxid (Ca(OH)₂), das erst nach etwa 6 bis 8 Stunden aus der Reaktion der Zementklinkerphasen (Calciumsilikatphasen, insbesondere C₃S) mit Wasser freigesetzt wird, reagieren.

Während sich die Hydratphasen aus z. B. dem C₃A und C₃S der Klinkerpartikel bilden, bilden Mikrosilika und Ca(OH)₂ zusätzliche C-S-H-Phasen, die dann in die noch vorhandenen Freiräume hineinwachsen und damit die erhärtende Zementsteinmatrix dichter werden lassen. Im Ergebnis entstehen aufgrund dieser puzzolanischen Reaktion zwischen dem Mikrosilika und dem Ca(OH)₂ besonders dichte und damit widerstandsfähige und dauerhafte Betone mit zum Teil extrem hoher Druckfestigkeit. Nachteilig ist bei Einsatz von Mikrosilika (Silikastaub aus der Eisensilizid-Gewinnung) die für Sichtbeton meist zu dunkle und ungleichmäßige Betonfarbe sowie die Notwendigkeit einer separaten aufwendigen und komplizierten Dosiereinrichtung.

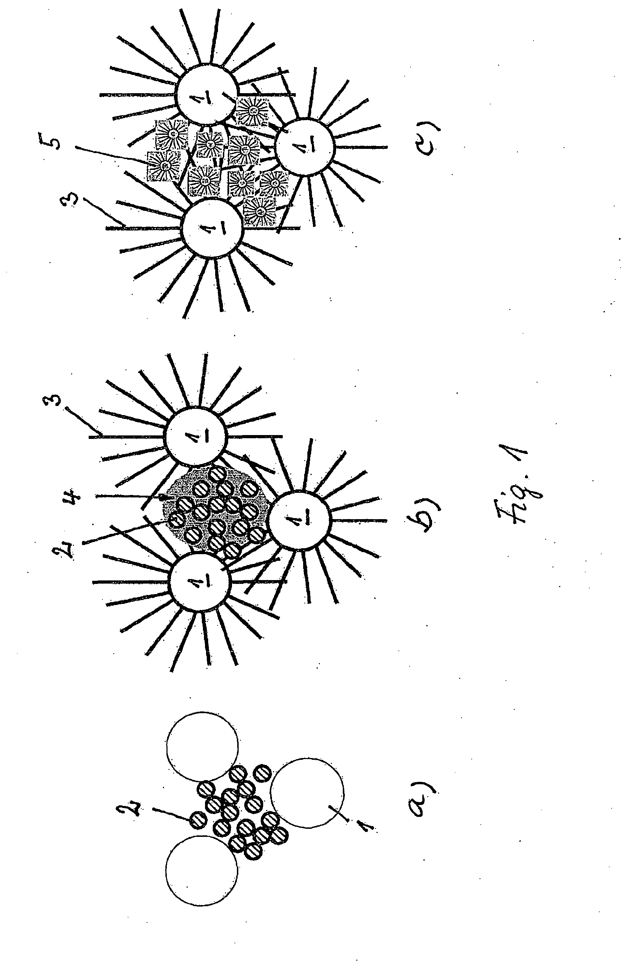

Das Reaktionsprinzip der puzzolanischen Reaktion mit z. B. Mikrosilika und Ca(OH)₂ ergibt sich schematisch aus Fig. 1a, b, c. Zunächst liegt eine trockene Mischung aus Zementteilchen 1 und Mikrosilikateilchen 2 vor (Fig. 1 a). Nach dem Anmischen mit Wasser ergibt sich nach dem Erstarren die dem Fachmann bekannte Ruhephase bzw. Ruheperiode der Mischung ohne beachtliche Erhärtung. Erst nach etwa 6 bis 8 Stunden erfolgt eine Erhärtungsreaktion der Silikat-, Calcium- und Aluminatphasen mit Wasser unter Bildung von z. B. nadelförmigen CSH-Phasenkristallen 3, wobei Ca(OH)₂ 4 freigesetzt wird (Fig. 1 b). Das Ca(OH)₂ 4 reagiert mit den Mikrosilikateilchen 2 und bildet zusätzlich feine C-S-H-Phasenkristalle 5. Diese verdichten die Struktur des erhärtenden Zementsteins und schaffen durch diese puzzolanische Reaktion ein dichteres Gefüge mit höheren Festigkeiten und Dauerhaftigkeiteh (Fig. 1c).

Für das bekannte puzzolanische Reaktionsprinzip steht nicht nur Mikrosilika zur Verfügung, sondern es werden auch andere SiO₂-Komponenten wie Silikastaub, Nanosilika, Metakaolin oder Flugasche verwendet.

Eine weitergehende Technologie zur Erstellung von Hochleistungsbetonen, die ebenfalls lediglich auf mineralischer Basis die Frühfestigkeitssteigerung ermöglicht und ohne puzzolanische Reaktionen auskommen kann, basiert auf lediglich granulometrisch optimierten Bindemitteln. Zum Einsatz kommen Normalzemente in Kombination mit Feinstzementen, deren Herstellung z. B. aus der EP 0 696 558 B1 bekannt ist. Die Feinstzemente haben Körnungen unter 20 µm und können großtechnisch bis Körnungen von 2 µm wirtschaftlich hergestellt werden.

Nach dieser Technologie können rezepturabhängig Hochleistungszemente für frühhochfeste Betone, Zemente für hochfeste Betone, insbesondere auch für hochfeste Sichtbetone, und Zemente mit besonderer Beständigkeit z. B. bezüglich aggressiver Medien gewährleistet werden. Dabei handelt es sich um Normzemente mit außergewöhnlichen Eigenschaften, die lediglich zur Einstellung der Verarbeitbarkeit noch Zusatzmittel erfordern.

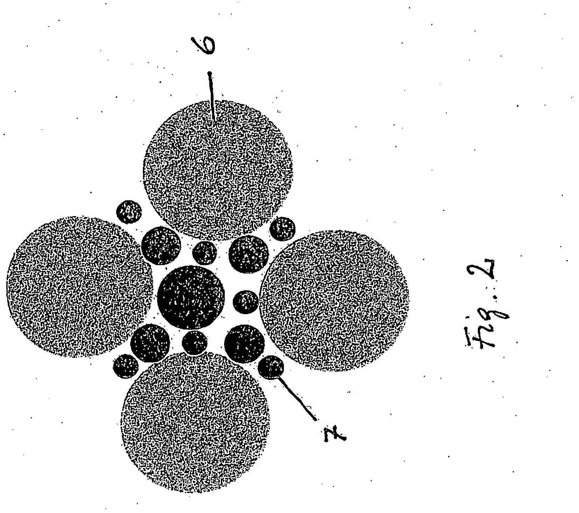

Fig. 2 verdeutlicht schematisch das Prinzip dieser Technologie. Man erkennt die relativ groben Körner 6 des Normalzements mit Korngrößen z. B. zwischen d₉₅ 25 und 30 µm und in den Zwickeln der groben Körner 6 die relativ kleinen Körner 7 des Feinstzements mit Korngrößen z. B. zwischen d₉₅ 2 und 20 µm. Eine Ergänzung und Steigerung der Frühfestigkeit nach 6 bis 8 Stunden kann dieses Prinzip durch den Zusatz von Ca(OH)₂ (EP 1 719 742 A1) oder von feinteiliger Kieselsäure erfahren.

Damit ist dieses Prinzip ausgereizt, ohne dass aber die Endfestigkeiten gesteigert (siehe EP 1 719 742 A1, Tabelle 1: Druckfestigkeiten nach 28 Tagen) und die Frühfestigkeiten früher eingestellt und geregelt werden können.

Aus der EP 1 702 899 A2 ist ein Bindemittel für Hochleistungsbetone bekannt, das ein Gemisch aus gemahlenem Zementklinker und wenigstens einem Zusatz- und/oder Zumahlstoff enthält, wobei der Klinkeranteil im Bindemittel 65 % nicht übersteigt und der Anteil der Kornfraktion von 0 - 10 µm in dem wenigstens einen Zusatz- und/oder Zumahlstoff vergrößert ist. Zusatz- und/oder Zumahlstoffe sind z. B. Hüttensand, Flugasche, Meta-Kaolin, Kalkstein.

Die DE 41 06 380 A1 beschreibt einen Spritzbeton, bei dem die Rückprallverminderung bei Einsatz von Mikrosilika durch eine Vorbehandlung des Mikrosilika gewährleistet werden soll. Letzteres wird mit 2 - 25 Gewichtsteilen einer Flüssigkeit aus der Gruppe Wasser, Alkanolamin, Polyol und wässrigen Lösungen von Betonzusatzmitteln, Alkanolamin, Polyol oder wasserlöslichen Cellulose-Verbindungen vorbehandelt. Insbesondere wirkt Mikrosilika beim Trockenspritzverfahren, wenn Mikrosilika mit Wasser oder mit einer wässrigen Lösung von Erstarrungsbeschleunigern behandelt wurde. Für die Vorbehandlung kann u.a. auch Calciumhydroxid verwendet werden.

Aus der DE 100 66 270 B4 ist ein Verfahren zur Herstellung von Porenbeton bekannt, wobei Bindemittel aus Zement und einer reaktionsfähigen CaO-Komponente, Zuschlagstoff, der aus zumindest einer feinen, reaktionsfähigen SiO₂-Komponente und zumindest einer groben Komponente so zusammengesetzt wird, dass er eine Graf'sche Gleichverteilung aufweist, Gasbildner und Wasser zu einer Schlämme gemischt werden, die Schlämme in Formen gegossen zum Auftreiben und Ansteifen gebracht wird, und die angesteifte Masse dampfgehärtet wird, wobei
a) die feine SiO₂-Komponente in einer Körnung bis maximal 60 µm eingesetzt wird, und die CaO-Komponente und die feine SiO₂-Komponente in einem solchen CaO/SiO₂-Molverhältni eingesetzt werden, dass bei der Dampfhärtung ein möglichst vollständiger Umsatz der feinen SiO₂-Komponente und der CaO-Komponente zu Calciumsilikathydratphasen erfolgt und
b) die grobe Komponente des Zuschlagstoffes in einer Körnung von 30 bis 400 µm eingesetzt wird, so dass sie mit der CaO-Komponente im Wesentlichen nicht reagiert und als Stützkorn in die gebildete Matrix der Calciumsilikathydratphasen eingebettet wird. Die feine Komponente kann bis hinunter zu kryptokristallinen bzw. hochdispersen SiO₂-Trägern wie Mikrosilika reichen.

Die EP 0 616 986 A1 offenbart ein mineralisches, hydraulisches Bindemittel welches einen Zementklinker mit den Klinkerphasen C₃S, C₂S, C₃A und C₄AF, eine sulfatische Komponente, eine wasserbindende Komponente, z.B. leicht gebranntes CaO, und eine rückprallminderne Komponente, z.B. amorphes Kieselsäurepulver, sowie Fließmittel aufweist. Gemäß dem Ausführungsbeispiel der EP 0 616 986 A1 werden Zement, Gips, Halbhydrat, CaO, Aluminiumsulfat, Silicafume und Fließmittel als Vormischung mit Zuschlag gemischt und mit einem w/b-Wert von 0,38 mit Wasser angemacht.

Aus der EP 0 289 720 A2 geht ein Verfahren zur Herstellung einer Spritzbetonschicht hervor, bei dem eine Spritzbetonmischung aus Zement, z.B. Portlandzement, Zuschlagstoffen und gegebenenfalls Zuschlagstoffen mit Treibluft vermischt wird, wobei die Treibluft mit synthetischer Kieselsäure beladen wird. Bei der Kieselsäure handelt es sich um pyrogene oder gefällte Kieselsäure. Die beispielhaft angegebenen gefällten Kieselsäuren weisen jeweils mittlere Primärteilchengrößen von 18, 35 oder 40 nm auf. Gemäß der EP 0 289 720 A2 wird die Festigkeit des Betons erhöht, da die Fällungskieselsäure mit dem überschüssigen Ca(OH)₂ des Zementbetons unter Bildung von Calciumsilikathydraten reagiert.

Aus der Veröffentlichung "Mechanical properties of silicone vulcanizates crosslinked with polymethylhydrosiloxanes, containing silica and calcium carbonate", ENGINEERING INFORMATION, INC., NEW YORK, NY, US;2006, FEJDYS M ET AL, geht eine Silikonvulkanist hervor, das als Füller gefällte Kieselsäure in Form von Sipernat 310 mit einer Korngröße von 5,5 µm und CaCO₃ enthält.

Die Veröffentlichung "Synthesis of Calcium Silicate Hydrate with Ca/Si=2 by Mechanochemical Treatment", JOURNAL OF THE AMERICAN CERAMIC SOCIETY, BLACKWELL PUBLISHING, MALDEN, MA, US, Bd.80, Nr. 2, 1.Januar 1996 (1996-01-01), Seiten 472-476 offenbart eine Mischung zur Herstellung von CSH-Phasen mit einer SiO₂-Komponente in Form von gefällter Kieselsäure und einer CaO-Komponente.

Aufgabe der Erfindung ist, ein hydraulisches, insbesondere lagerstabiles Bindemittel auf mineralischer Basis mit hohen Frühfestigkeiten und gesteigerten Endfestigkeiten im Vergleich zu bekannten, derartigen hydraulischen Bindemitteln zu schaffen, das insbesondere zur Herstellung sowohl schneller, als auch hochfester als auch besonders beständiger Betone geeignet ist, wobei die Höhe der Festigkeiten auf einfache Weise regelbar sein soll.

Diese Aufgabe wird durch die Merkmale der Ansprüche 1 und 15 gelöst. Vorteilhafte Weiterbildungen der Erfindung werden in den Unteransprüchen gekennzeichnet.

Gelöst wird die Erfindung somit durch ein mineralisches, hydraulisches Bindemittel in Form einer Ausgangstrockenmischung, insbesondere zur Herstellung von Beton oder Mörteln oder Zementsuspensionen auf Basis von zumindest einem Zement, wobei der Zement Klinkerphasen wie insbesondere C₃S, C₂S, C₃A, C₄AF, aufweist, die mit Wasser zu Zementstein erhärtende Hydratphasen bilden, und wobei der Zement nach dem Anmachen mit Wasser eine Ruhephase von einigen Stunden aufweist, in der keine beachtlichen Erhärtungsreaktionen stattfinden. Erfindungsgemäß enthält das Bindemittel zudem
- mindestens eine feinteilige SiO₂-Komponente in Form von gefällter Kieselsäure in Form von Agglomeratteilchen mit Korngrößen zwischen 3 und 15 µm
- mindestens eine feinteilige CaO-Komponente in Form von
   - Calciumoxid, welches 90 bis 99 Gew.-% CaO und Korngrößen zwischen 0,5 und 100 µm aufweist, und/oder,
   - Kalkhydrat mit CaO-Gehalten zwischen 60 und 75 Gew.-% und Korngrößen zwischen 0,7 und 100 µm.

Dabei bilden die mindestens eine SiO₂-Komponente und die mindestens eine CaO-Komponente mit Anmachwasser während der Ruhephase aufgrund einer puzzolanischen Reaktion erhärtende, eine Frühfestigkeit bewirkende Calciumsilikathydratphasen.

Ferner wird die Aufgabe gelöst durch ein Verfahren zur Herstellung eines derartigen Bindemittels, wobei die mindestens eine SiO₂-Komponente mit der mindestens einen CaO-Komponente vorgemischt wird und die Vormischung anschließend mit dem Zement vermischt wird.

Mit den neuen erfindungsgemäßen hydraulischen Bindemitteln können nunmehr hohe Frühfestigkeiten bereits in der Ruhephase der wasserhaltigen Gemische erzeugt werden, weil das System unabhängig von der Festigkeitsentwicklung der Zementmineralphasen ist. Insofern ist das System auch relativ unabhängig von der Ca(OH)₂-Entwicklung aus den Zementmineralphasen, insbesondere dem C₃S. Mithin kann eine Vielzahl von Zementsorten bzw. Zementtypen verwendet werden, die unterschiedliche Reaktionsmechanismen zur Erhärtung nach der Ruhephase aufweisen. Vorzugsweise aber werden zur Herstellung der erfindungsgemäßen hydraulischen Bindemittel Porttandzemente, Porttandkompositzemente und Hochofenzemente verwendet, deren normale Erhärtung aufgrund der Reaktion der Zementphasen erst nach etwa 6 bis 8 Stunden einsetzt.

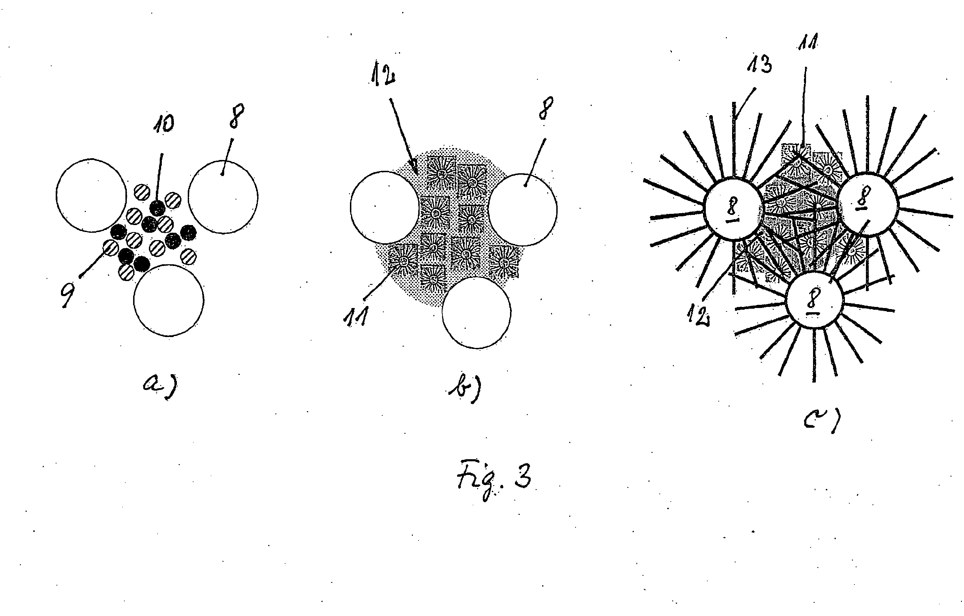

Das erfindungsgemäße Prinzip wird in Fig. 3a, b, c verdeutlicht. Die Ausgangstrockenmischung des erfindungsgemäßen hydraulischen Bindemittels enthält relativ grobe Zementpartikel 8. In den Zwickeln dieser Zementpartikel 8 befinden sich Partikel 9 der zugesetzten feinteiligen (mehlfein) SiO₂-Komponente und Partikel 10 der zugesetzten feinteiligen (mehlfein) CaO-Komponente (Fig. 3a). Nach Zugabe von Wasser beginnt die Reaktion zwischen der SiO₂-Komponente und der CaO-Komponente. Es bilden sich schon nach z. B. ca. 1 Stunde ausreichend feinteilige erhärtende Calciumsilikatphasen 11 (Fig. 3b), ohne dass die Verarbeitbarkeit (Rheologie) beeinträchtigt wird. Im Anschluss daran oder auch schon gegen Ende dieser ersten puzzolanischen Erhärtungsphase bilden sich aus den Zementpartikeln 8 Ca(OH)₂ 12 und schließlich die C-S-H-Phasen 13, wobei letztere in das bereits vorhandene C-S-H-Phasengefüge der puzzolanischen Reaktion hineinwachsen (Fig. 3c).

Es hat sich gezeigt, dass die Erhärtungsreaktionen der Zementpartikel frühzeitiger bezüglich der Ruhephase beginnt, wenn erfindungsgemäß bereits puzzolanische Erhärtungsphasen vorliegen. Insofern wirkt das puzzolanische System synergistisch.

Es ist überraschend, dass die puzzolanische Reaktion keinen nachteiligen Einfluss auf die Verarbeitbarkeit und die nachfolgende Erhärtung der Zementminerale nach der Ruhephase hat.

Überraschend ist auch, dass nicht nur Frühfestigkeiten zu einem früheren Zeitpunkt erzielbar sind, sondern dass auch die Endfestigkeiten nach 28 Tagen erheblich gesteigert werden können.

Eine Ausführungsform der Erfindung sieht vor, Normalzemente mit Körnungen d₉₅ zwischen 20 und 70, insbesondere zwischen d₉₅ 25 und 35 µm mit der SiO₂-Komponente und der CaO-Komponente zu kombinieren. Nach einer weiteren Ausführungsform der Erfindung werden Normalzemente mit Feinstzementen mit Körnungen zwischen d₉₅ 2 und 20 µm, insbesondere zwischen d₉₅ 6 und 16 µm zusammengemischt und mit der SiO₂ und der CaO-Komponente kombiniert. Schließlich sieht eine dritte Ausführungsform der Erfindung vor, für die SiO₂-Komponente mindestens zwei SiO₂-Kömponenten zu verwenden, die sich bezüglich ihres Korngrößenspektrums und vorzugsweise auch aufgrund ihrer Herstellung unterscheiden. Dabei wird eine erste SiO₂-Komponente mit Agglomerat-Korngrößen zwischen d₉₅ 3 und 15, insbesondere zwischen d₉₅ 3 und 5 µm (mittlere Teilchengröße, gemessen mit einem Multisizer 100 µm Kapillare in Anlehnung an ASTM C 690-1992) und eine zweite Komponente mit Primärteilchengrößen (mittlere Größe der Primärteilchen 7 bis 40 nm) zwischen 0,007 und 0,04 µm, insbesondere zwischen 0,01 und 0,02 µm verwendet. Mit dem Mengenverhältnis dieser beiden Komponenten kann auf einfache Weise die Festigkeitsentwicklung der puzzolanischen Reaktion geregelt bzw. gesteuert werden, weil die feinen Bestandteile der feineren SiO₂-Komponente schneller reagieren.

Feinstteilig meint Primärteilchengrößen ≤ 0,04 µm. Die Normalzemente weisen Korngrößen zwischen d₉₅ 20 und 70 µm und spezifische Oberflächen zwischen 0,3 und 0,8 m²/g (Blaine) und Feinstzemente Korngrößen zwischen d₉₅ 2 und 20 µm sowie spezifische Oberflächen zwischen 1 und 5 m²/g (BET) auf.

Eine weitere einfache Regelbarkeit ergibt sich durch die Verwendung unterschiedlicher CaO-Komponenten, indem die Verwendung von CaO (Branntkalk) eine schnellere Reaktion und höhere Frühfestigkeiten und Endfestigkeiten erbringt als die Verwendung von Ca(OH)₂ (Kalkhydrat). Offenbar spielt dabei die Ablöschreaktion des CaO bei Zutritt des Anmachwassers eine wesentliche Rolle, indem das daraus resultierende Ca(OH)₂ im stadium naszendi besonders günstige Reaktionsbedingungen mit der SiO₂-Komponente schafft.

Besonders effektive Zusammensetzungen erfindungsgemäßer hydraulischer Bindemittel ergibt sich aus Tabelle 1.

**Tabelle 1**

| | **Korngröße (µm) d₉₅** | **Mengenanteil [Gewichtsteile]** |
|---|---|---|
| **Normalzement** | 20 bis 70 | 0 bis 100 |
| | insbes. 25 bis 35 | vorzugsw. 40 bis 90 |
| | | insbes. 50 bis 80 |
| **Feinstzement und**/**od**. **Klinkerfeinstmehl und/od. Hüttensandfeinstmehl** | 2 bis 20 | 0 bis 100 |
| | insbes. 6 bis 16 | vorzugsw. 1 bis 50 |
| | | insbes. 25 bis 30 |
| **Erste SiO₂-Kompohente (Agglomeratteilchen)** | 3 bis 15 | 0,1 bis 5 |
| | insbes. 3 bis 5 | vorzugsw. 0,1 bis 5 |
| | | insbes. 0,1 bis 5 |
| **Zweite SiO₂-Komponente (Primärteitchen)** | 0,007 bis 0,04 | 0 bis 5 |
| | insbes. 0,01 bis 0,02 | vorzugsw. 0,1 bis 5 |
| | | insbes. 0,1 bis 3 |
| **CaO-Komponente** | 0,5 bis 100 | 0 bis 15 |
| | insbes. 20 bis 80 | vorzugsw.0,1 bis 15 |
| | | insbes. 0,1 bis 5 |
| **Ca(OH)₂-Komponente** | 0,7 bis 100 | 0 bis 15 |
| | insbes. 0,7 bis 35 | vorzugsw. 0,1 bis 15 |
| | | insbes. 0,1 bis 5 |

Als Normalzemente werden bevorzugt verwendet genormte Portlandzemente, Portlandkompositzemente und Hochofenzemente, wobei vornehmlich Portlandzemente verwendet werden.

Vornehmlich werden Feinstzemente verwendet, die gemäß EP 0 696 558 B1 hergestellt sind.

Die erste SiO₂-Kornponente ist eine gefällte, synthetische Kieselsäure mit der spezifischen Oberfläche (Spezifische Oberfläche (N2) gemessen mit Areameter in Anlehnung an ISO 5794-1, Annex D) zwischen 50 und 750, insbesondrere zwischen 50 und 200 m²/g und die zweite SiO₂-Komponente insbesondere eine pyrogene Kieselsäure (AEROSIL der Firma Degussa) mit einer spezifischen Oberfläche (BET-Oberfläche nach DIN 66136) zwischen 30 und 380, insbesondere zwischen 50 und 200 m²/g.

Die CaO-Komponente ist gebrannter Kalk, wie Weißfeinkalk und/oder hydraulischer gebrannter Kalk, oder ein Calciumhydroxid, vorzugsweise als Weißfeinkalkhydrat und/oder als hydraulisches Kalkhydrat. Die spezifische Oberfläche des Branntkalks liegt vorzugsweise zwischen 1 und 3 m²/g (BET). Die spezifische Oberfläche des Kalkhydrats liegt vorzugsweise zwischen 18 und 25 m²/g oder ist größer (BET).

Nach der Erfindung kann auf einfache Weise eine besonders hohe Lagerstabilität der erfindungsgemäßen Mischungen erreicht werden, indem eine Vormischung der sehr leichten synthetischen Kieselsäuren mit dem vergleichsweise schweren Calciumoxid und/oder Calciumhydroxid vorgenommen wird. Offenbar schützt die Kieselsäurekomponente die CaO-Komponenten vor vorzeitigen Reaktionen mit Luftfeuchtigkeit und Kohlendioxid aus der Luft.

## Patentansprüche

1. Mineralisches, hydraulisches Bindemittel in Form einer Ausgangstrockenmischung, insbesondere zur Herstellung von Beton oder Mörteln oder Zementsuspensionen, auf Basis von zumindest einem Zement, wobei der Zement Klinkerphasen wie insbesondere C₃S, C₂S, C₃A, C₄AF aufweist, die mit Wasser zu Zementstein erhärtende Hydratphasen bilden, und wobei der Zement nach dem Anmachen mit Wasser eine Ruhephase von einigen Stunden aufweist, in der keine beachtlichen Erhärtungsreaktionen stattfinden,
**gekennzeichnet durch**
- mindestens eine feinteilige SiO₂-Komponente in Form von gefällter Kieselsäure in Form von Agglomeratteilchen mit Korngrößen zwischen 3 und 15 µm
- mindestens eine feinteilige CaO-Komponente in Form von
- Calciumoxid, welches 90 bis 99 Gew.-% CaO und Korngrößen zwischen 0,5 und 100 µm aufweist, und/oder
- Kalkhydrat mit CaO-Gehalten zwischen 60 und 75 Gew.-% und Korngrößen zwischen 0,7 und 100 µm
- wobei die mindestens eine SiO₂-Komponente und die mindestens eine CaO-Komponente mit Anmachwasser während der Ruhephase aufgrund einer puzzolanischen Reaktion erhärtende, eine Frühfestigkeit bewirkende Calciumsilikathydratphasen bilden.

2. Bindemittel nach Anspruch 1,
**dadurch gekennzeichnet, dass**
die SiO₂-Komponente mit 0,1 bis 5 Gew.-%, insbesondere 0,1 bis 3 Gew.-% enthalten ist.

3. Bindemittel nach Anspruch 2,
**dadurch gekennzeichnet, dass**
die SiO₂-Komponente Korngrößen zwischen 3 und 5 µm aufweist.

4. Bindemittel nach einem oder mehreren der Ansprüche 1 bis 3,
**gekennzeichnet durch**
mindestens zwei herstellungsbedingt unterschiedliche SiO₂-Komponenten mit unterschiedlichen Korngrößenbereichen, wobei die eine SiO₂-Komponente sehr fein ist mit Körngrößen zwischen 0,007 und 0,04 µm und die andere SiO₂-Komponente gröber und die Fällungskieselsäure ist, wobei das Mengenverhältnis in Gew.-%, vorzugsweise von 1:1 bis 1:50, insbesondere von 1:2 bis 1:5 beträgt.

5. Bindemittel nach einem oder mehreren der Ansprüche 1 bis 4,
**dadurch gekennzeichnet, dass**
die gefällte Kieselsäure 94 bis 99 Gew.-% SiO₂ enthält.

6. Bindemittel nach einem oder mehreren der Ansprüche 1 bis 5,
**dadurch gekennzeichnet, dass**
die eine SiO₂-Komponente Primärteilchengrößen zwischen 0,007 und 0,04, insbesondere zwischen 0,01 und 0,02 µm aufweist und eine pyrogene Kieselsäure ist, die 96 bis 100 Gew.-% SiO₂ enthält.

7. Bindemittel nach einem oder mehreren der Ansprüche 1 bis 6,
**dadurch gekennzeichnet, dass**
die SiO₂-Komponente in Mengen von 0,1 bis 5, insbesondere von 0,1 bis 3 Gew.-%, bezogen auf den Zementanteil im Bindemittel enthalten ist.

8. Bindemittel nach einem oder mehreren der Ansprüche 1 bis 7,
**dadurch gekennzeichnet, dass**
das Calciumoxid 95 bis 98 Gew.-% CaO aufweist.

9. Bindemittel nach Anspruch 8,
**dadurch gekennzeichnet, dass**
die CaO-Komponente Korngrößen zwischen 20 und 80 µm aufweist.

10. Bindemittel nach einem oder mehreren der Ansprüche 1 bis 9,
**dadurch gekennzeichnet, dass**
das Kalkhydrat CaO-Gehalte zwischen 70 und 75 Gew.-% aufweist.

11. Bindemittel nach einem oder mehreren der Ansprüche 1 bis 10,
**dadurch gekennzeichnet, dass**
der Zement ein genormter Zement nach EN 197 und/oder DIN 1164 ist und eine normale Feinheit mit Korngrößen d₉₅ zwischen 20 und 70 µm sowie spezifische Oberflächen zwischen 0,3 und 0,8 m²/g aufweist.

12. Bindemittel nach Anspruch 11,
**dadurch gekennzeichnet, dass**
der Zement ein Portlandzement oder Portlandkompositzement oder Hochofenzement ist.

13. Bindemittel nach Anspruch 12,
**dadurch gekennzeichnet, dass**
ein Feinstzement insbesondere zusätzlich mit Feinheiten d₉₅ zwischen 2 und 20 µm Korngröße sowie 1 und 5 m²/g spezifischer Oberfläche enthalten ist, wobei der Feinstzement auf der Basis von Portlandzementklinker und/oder Hüttensandfeinstmehl hergestellt ist.

14. Bindemittel nach Anspruch 13,
**dadurch gekennzeichnet, dass**
das Gewichtsverhältnis zwischen Normalzement und Feinstzement 0:100 oder 100:0 bis 20:1, insbesondere 3:1 bis 5:1 beträgt.

15. Verfahren zur Herstellung eines Bindemittels nach einem oder mehreren der Ansprüche 1 bis 14,
**gekennzeichnet durch** Vormischen mindestens einer SiO₂-Komponente mit mindestens einer CaO-Komponente und anschließendem Mischen der Vormischung mit dem Zement.

## Claims

1. A mineral, hydraulic binder in the form of an initial dry mixture, in particular for the production of concrete or mortars or cement suspensions, based on at least one cement, wherein the cement comprises clinker phases, such as in particular C₃S, C₂S, C₃A, C₄AF, which form hydrate phases that harden with water to give hardened cement paste, and wherein, after mixing with water, the cement has a rest period of several hours in which no significant hardening reactions take place,
**characterised by**
- at least one finely divided SiO₂ component in the form of precipitated silica in the form of agglomerate particles having particle sizes of between 3 and 15 µm
- at least one finely divided CaO component in the form of
- calcium oxide, which comprises 90 to 99 wt.% CaO and has particle sizes of between 0.5 and 100 µm, and/or
- hydrated lime having CaO contents of between 60 and 75 wt.% and particle sizes of between 0.7 and 100 µm
- wherein the at least one SiO₂ component and the at least one CaO component form calcium silicate hydrate phases with mixing water which harden during the rest period by virtue of a pozzolanic reaction and create early strength.

2. The binder according to claim 1,
**characterised in that**
the SiO₂ component is contained in an amount of 0.1 to 5 wt.% and in particular 0.1 to 3 wt.%.

3. The binder according to claim 2,
**characterised in that**
the SiO₂ component has particle sizes of between 3 and 5 µm.

4. The binder according to one or more of claims 1 to 3,
**characterised by**
at least two SiO₂ components that are different as a result of their method of production and have different particle size ranges, with one SiO₂ component being very fine with particle sizes of between 0.007 and 0.04 µm and the other SiO₂ component being coarser and being precipitated silica and the weight ratio in wt.% preferably being from 1:1 to 1:50 and in particular from 1:2 to 1:5.

5. The binder according to one or more of claims 1 to 4,
**characterised in that**
the precipitated silica contains 94 to 99 wt.% of SiO₂.

6. The binder according to one or more of claims 1 to 5, **characterised in that**
one SiO₂ component has primary particle sizes of between 0.007 and 0.04, in particular between 0.01 and 0.02 µm and is a pyrogenic silica containing 96 to 100 wt.% of SiO₂.

7. The binder according to one or more of claims 1 to 6,
**characterised in that**
the SiO₂ component is contained in quantities of 0.1 to 5, in particular 0.1 to 3 wt.%, based on the proportion of cement in the binder.

8. The binder according to one or more of claims 1 to 7,
**characterised in that**
the calcium oxide comprises 95 to 98 wt.% of CaO.

9. The binder according to claim 8,
**characterised in that**
the CaO component has particle sizes of between 20 and 80 µm.

10. The binder according to one or more of claims 1 to 9,
**characterised in that**
the hydrated lime has CaO contents of between 70 and 75 wt.%.

11. The binder according to one or more of claims 1 to 10,
**characterised in that**
the cement is a standardised cement in accordance with EN 197 and/or DIN 1164 and has a normal fineness with particle sizes d₉₅ of between 20 and 70 µm and specific surface areas of between 0.3 and 0.8 m²/g.

12. The binder according to claim 11,
**characterised in that**
the cement is a Portland cement or Portland composite cement or blast furnace cement.

13. The binder according to claim 12,
**characterised in that**
in particular an ultrafine cement having finenesses d₉₅ of between 2 and 20 µm particle size and a specific surface area of between 1 and 5 m²/g is additionally contained, said ultrafine cement having been produced on the basis of Portland cement clinker and/or ultrafine ground granulated blast furnace slag.

14. The binder according to claim 13,
**characterised in that**
the weight ratio of normal cement to ultrafine cement is 0:100 or 100:0 to 20:1 and in particular 3:1 to 5:1.

15. A process for producing a binder according to one or more of claims 1 to 14,
**characterised by** pre-mixing at least one SiO₂ component with at least one CaO component and then mixing the premix with the cement.

## Revendications

1. Liant minéral hydraulique sous la forme d'un mélange de départ sec, en particulier pour la production de béton ou de mortier ou de suspensions de ciment, sur la base d'au moins un ciment, dans lequel le ciment présente des phases de clinker telles qu'en particulier C₃S, C₂S, C₃A, C₄AF qui forment des phases d'hydrate durcissant avec de l'eau en une pierre de ciment et dans lequel le ciment présente après le gâchage avec de l'eau, une phase de repos de quelques heures, dans laquelle aucune réaction de durcissement notable n'a lieu,
**caractérisé par**
- au moins un composant de SiO₂ à particules fines sous la forme d'acide silicique précipité sous la forme de particules d'agglomérat présentant une granulométrie entre 3 et 15 µm
- au moins un composant de CaO à particules fines sous la forme
-- d'oxyde de calcium qui présente 90 à 99 % en poids de CaO et une granulométrie entre 0,5 et 100 µm, et/ou
-- d'hydrate de chaux présentant des teneurs en CaO entre 60 et 75 % en poids et une granulométrie entre 0,7 et 100 µm
- dans lequel l'au moins un composant de SiO₂ et l'au moins un composant de CaO forment avec l'eau de gâchage pendant la phase de repos, des phases d'hydrate de silicate de calcium durcissant en raison d'une réaction pouzzolanique, entraînant une résistance précoce.

2. Liant selon la revendication 1,
**caractérisé en ce que**
le composant de SiO₂ est contenu avec 0,1 à 5 % en poids, en particulier 0,1 à 3 % en poids.

3. Liant selon la revendication 2,
**caractérisé en ce que**
le composant de SiO₂ présente une granulométrie entre 3 et 5 µm.

4. Liant selon une ou plusieurs des revendications 1 à 3,
**caractérisé par**
au moins deux composants de SiO₂ différents en raison de la fabrication, ayant des plages de granulométrie différentes, dans lequel l'un des composants de SiO₂ est très fin, avec une granulométrie entre 0,007 et 0,4 µm et l'autre composant de SiO₂ est plus grossier et est l'acide silicique de précipitation, dans lequel le rapport en quantité en % en poids est de préférence de 1:1 à 1:50, en particulier de 1:2 à 1:5.

5. Liant selon une ou plusieurs des revendications 1 à 4,
**caractérisé en ce que**
l'acide silicique précipité contient 94 à 99 % en poids de SiO₂.

6. Liant selon une ou plusieurs des revendications 1 à 5,
**caractérisé en ce que**
l'un des composants de SiO₂ présente des tailles de particules primaires entre 0,007 et 0,04, en particulier entre 0,01 et 0,02 µm et est un acide silicique pyrogène qui contient 96 à 100 % en poids de SiO₂.

7. Liant selon une ou plusieurs des composants 1 à 6
**caractérisé en ce que**
le composant de SiO₂ est contenu en quantités de 0,1 à 5, en particulier de 0,1 à 3 % en poids, par rapport à la proportion de ciment dans le liant.

8. Liant selon une ou plusieurs des revendications 1 à 7,
**caractérisé en ce que**
l'oxyde de calcium présente 95 à 98 % en poids.

9. Liant selon la revendication 8,
**caractérisé en ce que**
le composant de CaO présente une granulométrie entre 20 et 80 µm.

10. Liant selon une ou plusieurs des revendications 1 à 9,
**caractérisé en ce que**
l'hydrate de chaux présente des teneurs en CaO entre 70 et 75 % en poids.

11. Liant selon une ou plusieurs des revendications 1 à 10,
**caractérisé en ce que**
le ciment est un ciment normalisé selon les normes EN 197 et/ou DIN 1164 et présente une finesse normale avec une granulométrie d₉₅ entre 20 et 70 µm et des surfaces spécifiques entre 0,3 et 0,8 m²/g.

12. Liant selon la revendication 11,
**caractérisé en ce que**
le ciment est un ciment Portland ou un ciment Portland composite ou un ciment de haut fourneau.

13. Liant selon la revendication 12,
**caractérisé en ce que**
un ciment fin est contenu, en particulier en outre avec des finesses d₉₅ entre 2 et 20 µm de granulométrie et 1 et 5 m²/g de surface spécifique, dans lequel le ciment fin est produit à base de clinker de ciment portland et/ou de laitier fin.

14. Liant selon la revendication 13,
**caractérisé en ce que**
le rapport en poids entre le ciment normal et le ciment fin est de 0:100 ou de 100:0 à 20:1, en particulier de 3:1 à 5:1.

15. Procédé de production d'un liant selon une ou plusieurs des revendications 1 à 14,
**caractérisé par** un prémélange d'au moins un composant de SiO₂ avec au moins un composant de CaO et ensuite, le mélange du prémélange avec le ciment.
